# EUROPEAN PATENT APPLICATION

(11) **EP 0 561 647 A2**
(43) Date of publication of application: **22.09.1993**
(21) Application number: 93302100.8
(22) Date of filing: 19.03.1993
(51) Int. Cl.: F21Q 1/00

(54) **Lamp assembly for a vehicle, in particular side marker**

(30) Priority: 20.03.1992 GB 9206177
(71) Applicant: FLEXIBLE LAMPS LIMITED, Epping, Essex CM16 4JJ (GB)
(72) Inventor: Copping, Paul Alen, Epping Essex CM16 6JT (GB)
(74) Representative: Cummings, Sean Patrick

(57) **Abstract**

The present invention relates to a lamp assembly for a motor vehicle comprising
a light source,
collimating means for collimating at least a portion of light from said source to provide a substantially parallel light beam and
diffuser means disposed in the path of said parallel light beam,
characterised in that the said diffuser means is adapted to provide a first light flux which is transmitted by the diffuser means with small or no dispersion to provide a first flux of high intensity and a second flux in which the light is more widely dispersed to provide a general background flux, the intensity of the first flux when viewed on its optical axis being significantly greater than the intensity of the second flux.

## Description

The present invention relates to a lamp assembly and has particular reference to a lamp assembly for a vehicle of the type known in the trade as a "side marker". Side marker lights are intended to provide illumination directed at a substantial angle to the fore-aft line of the vehicle. The purpose of a side marker being to give an indication of the dimensions of the vehicle such as an articulated lorry during motion. Side markers need to serve two purposes:-
1. They need to provide a general background illumination and simply provide an indication of presence and size.
2. They further need to provide a directed beam of a relatively high intensity with a narrow light distribution in order to provide a much longer range to give an indication of presence of the vehicle or obstruction.

Side markers particularly on articulated vehicles at the present time comprise separate units with separate illumination to provide a) the direction marker and b) the background marker. This is an expensive solution since with the average articulated tractor trailer arrangement, the average life of a light bulb is some 400 hours of operation or 10 weeks use. It will be appreciated, therefore, that there is a considerable maintenance overhead in changing so many bulbs on the vehicle.

The present invention seeks to overcome this problem by providing in a single side marker a combination of both a background illuminating flux and a directed flux.

According to one aspect of the present invention, therefore, there is provided:
a lamp assembly for a motor vehicle comprising a light source,
collimating means for collimating at least a portion of light from said source to provide a substantially parallel light beam and
diffuser means disposed in the path of said parallel light beam,
characterised in that the said diffuser means is adapted to provide a first light flux which is transmitted by the diffuser means with small or no dispersion to provide a first flux of high intensity and a second flux in which the light is more widely dispersed to provide a general background flux, the intensity of the first flux when viewed on its optical axis being significantly greater than the intensity of the second flux.

In one aspect of the present invention the lamp assembly may be a multi-lamp cluster in which the light source collimating means and diffuser are disposed at an end edge thereof and the light source is shared with another lamp function.

The diffuser means may comprise a first diffuser portion to produce high intensity flux and a secondary diffuser portion to produce a low intensity background flux. Where the light source is a shared light source, the housing accommodating the light source may be provided with two apertures for the transmission of light, at least one of which is provided with the assembly in accordance with the present invention. The diffuser means may also include a reflex optic portion.

The collimating means may be a lens or a reflector.

According to an aspect of the invention, where the collimating means is a lens, the lens may be a Fresnal lens, a pillow-case optic or a prismatic optic. The diffuser means have a substantially smooth outer surface, any optical characteristics being accommodated on an internal (that is to say internal of the lamp assembly) surface. The diffuser means may be part of a sealed unit in which a clear sealing plate may be disposed in spaced relationship with said diffuser means. The sealing plate may be plain to transmit light from said collimating means to said diffuser means, or may comprise all or part of the collimating means.

The diffuser means may have a planar outside wall with the optical surface on the inner wall thereof. The first diffuser portion may be a Fresnel optic, a pillow-case optic or a prismatic optic. The second diffuser portion may be Fresnel optic, a pillowcase optic and/or a prismatic optic which is arranged to provide a dispersed flux.

In a particular embodiment of the present invention the lamp assembly in accordance with the present invention may include diffuser means comprising a sealed unit having an outer diffuser portion and an inner lens portion, said inner lens portion comprising collimating means for providing a bundle of substantially parallel rays incident upon the diffuser portion, which diffuser means comprises a first and second diffuser portions to provide said first and second fluxes. The diffuser means may comprise a pillow-case optic having an array of different shaped pillow-case elements to provide both the first flux and the second flux.

In a particular aspect of the invention the diffuser may also include a reflex optic portion to provide an external reflector in respect of light incident upon the diffuser externally of the assembly.

Where the collimating means is a lens, such a lens may be a Fresnel lens comprising a sheet of transparent optical material having a plurality of grooves formed therein. Typically, the sheet may have a planar surface and a grooved surface; the grooves may form a plurality of concentric ridges, each groove being separated from its neighbouring grooves by a ridge of triangular cross-section. Light from the said lamp means and transmitted by the lens means may, therefore, impinge on the said diffuser means as a parallel beam, thereby increasing the intensity of light transmitted by the said diffuser means as compared with divergent or scattered light incident on such diffuser means.

According to a particular aspect of the present invention, therefore, the second lamp opening may also comprise collimating means and diffuser means arranged in accordance with the said different aspect of the present invention.

The said diffuser means may be formed from a coloured transparent plastics material. Typically, the diffuser means may comprise a substantially opaque portion and a diffuser lens portion; the diffuser lens portion may be arranged to transmit light from the said lens means. The diffuser means may have a planar first surface and a shaped second surface; the said second surface may be disposed towards the said lens means. Preferably, the diffuser means may comprise a plurality of pillow-case lens elements which may be arranged in a regular array over the portion of the diffuser means. Each pillow-case lens element may be shaped to provide a predetermined divergence of parallel light incident thereon; and the pillow-case lens elements may be the same or different one from the others.

According to a particular aspect of the invention, the diffuser lens means may include a plurality of different types of pillow-case lens element, the different types may be arranged in a predetermined pattern on the lens portion. Each pillow-case lens element may be generally square or rectangular in plan view and may have a generally convex second surface. The cross sectional curvature of the said second surface in a first direction parallel to two sides of the pillow-case lens element may be the same or different from the cross-sectional curvature of the said second surface in a second direction orthogonal to the said first direction and parallel with the other two sides of said element. In one embodiment of the invention, the lens portion of the diffuser means may comprise two types of pillow-case lens element: a first pillow-case lens element having a dispersion angle in one plane of 15° to 25° typically 20° and a dispersion angle in the other direction of about 35° to 45° typically 40°; and a second pillow-case lens element having a dispersion angle in said one plane of about 15° to 25° typically 20° and a dispersion angle in the second plane of about 85° to 95° typically 90°. The said second pillow-case lens elements may be disposed around the periphery of the lens portion, and the first pillow-case lens elements may be arranged towards the centre thereof.

The present invention, therefore, in one aspect, obviates the requirement for separate side marker lamp apparatus in a vehicle or trailer in the region of a lamp cluster. The combination of the directional lamp and the side marker lamp permits the use of a single illuminating means or bulb to provide two or more lighting functions. The light for the side marker portion of the assembly is further caused to perform two functions, namely a background general background illuminating flux and a directional flux.

Following is a description by way of example only and with reference to the accompanying drawings of methods of carrying the present invention into effect.

In the drawings:-

Figure 1 is a plan view of one end of a lamp assembly in accordance with the present invention.

Figure 2 is a sectional side view of the assembly of Figure 1.

Figure 3 is a different sectional side view of the assembly of Figure 1.

Figure 4 is a plan view of a lens means for a lamp in accordance with the present invention.

Figure 5 is an optical diagram which shows the refraction pattern of the lens means of Figure 4.

Figure 6 is a plan view of a diffuser means for a lamp in accordance with the present invention.

Figure 7 is an enlarged plan view of a portion of the diffuser means of Figure 6.

Figure 8 shows a plan view and two sectional views of a pillow-case lens element of the diffuser of Figure 6.

Figure 9 shows a plan view and two sectional views of a different pillow-case lens element of the diffuser means of Figure 6.

Figure 10 is a diagrammatic directional view of an alternative embodiment of the present invention in which the collimating means is a parabolic reflector.

Figure 11 is a further embodiment of the present invention shaping the way in which different optical arrangements may be employed.

Figures 12A, 12B and 12C are diagrammatic representations of each of said different optical assemblies for use in Figure 11.

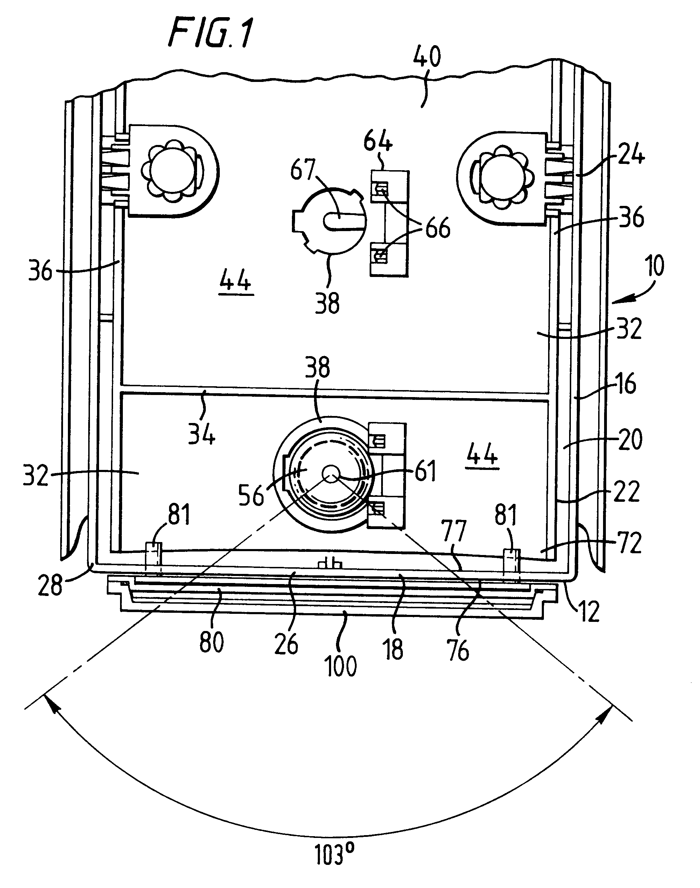

In Figure 1, a lamp assembly 10 for a vehicle includes a housing 12 having a generally rectangular back wall 14 which carries two longitudinal side walls 16 and two transverse side walls 18. The back wall 14 and side walls 16, 18 are moulded as a unitary construction from an opaque plastics material to define a recess 20 which houses a tray 22. Each side wall 16, 18 terminates remote from back wall 14 in a straight, front edge 24, 26 respectively; the front edges 24 of the longitudinal side walls 16 and the front edges 26 of the transverse side walls 18 define a continuous peripheral edge 28 which carries a transparent, generally rectangular front lens 30 (not shown).

Tray 22 is generally rectangular in plan view and is shaped to define a plurality of recesses or spaces 32 which are separated one from the other by partitions 34; each partition 34 extending between longitudinal side walls 36 of the tray 22. Each space 32 is provided with a bulb socket 38 which extends through the tray 22 between a front surface 40 thereof and a back surface 42. The back surface 42 of tray 22 carries a conducting metal strip 48 which is attached to the former by a plurality of plastic rivets 50. Juxtaposed each bulb socket 38, the metal strip 48 is formed into a generally cylindrical flange port 52 having two "bayonet-type" slots 54 formed therein. A bulb 56 of the "bayonet" type having a cylindrical base portion 58 carrying two radially extending spigots 59 is inserted through socket 38 and is held in place by engagement of the spigots 59 in the slots 54. The front surface 40 of each space 32 is shaped to define a reflector 44, and bulb 56 is held in socket 38 such that the filament 61 of the bulb 56 is positioned at the focal point of the reflector 44, whereby light fitted by filament 61 is reflected by reflector 44 to form a parallel beam which is oriented substantially orthogonally to the said lens 30 for transmission therethrough.

Back surface 42 carries a plurality of integrally moulded terminal carriers 64 which are disposed juxtaposed each bulb socket 38. Each terminal carrier 64 carries a metal terminal element 66 comprising a leaf spring 67 which engages a terminal provided in the base of bulb 56. Each terminal 66 also comprises two connectors 70 (not shown) which can be used to connect the terminal 66 to an electrical supply and/or to another of the connectors 70. The said metal strip 48 is connected to the ground potential of the vehicle. Each space 32 constitutes a lamp unit and may serve, for example, as a head lamp, a fog lamp, direction indicator, marker lamp etc.

End wall 18 at one end of the tray 22 is cut away to define a generally rectangular opening 74. Juxtaposed opening 74, the outer surface 76 of housing 12 carries a lens plate 80 which extends across the opening 74. Lens plate 80 is provided with two inwardly directed spigots 81 which extend through holes formed in the said one side wall 18 towards each longitudinal side wall 16, which serve to attach lens plate 80 to the housing 12. Outer surface 76 of the housing 12 also carries a seal 82 formed of a foamed plastics material, which seal 82 is attached around the periphery of opening 74 between housing 12 and an inner surface 86 of the lens plate 80 by means of an adhesive.

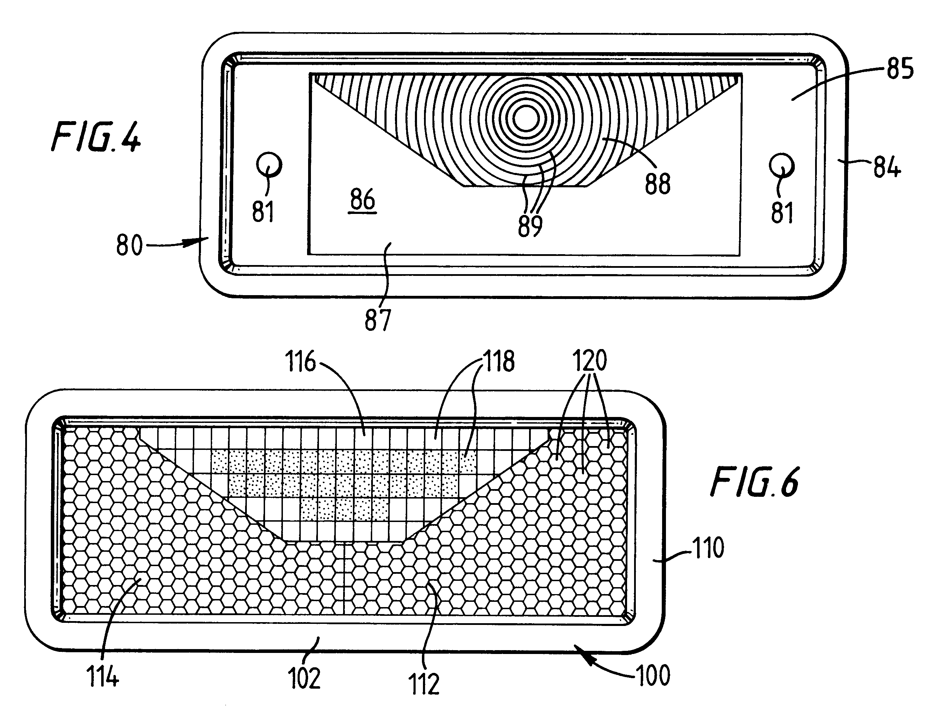

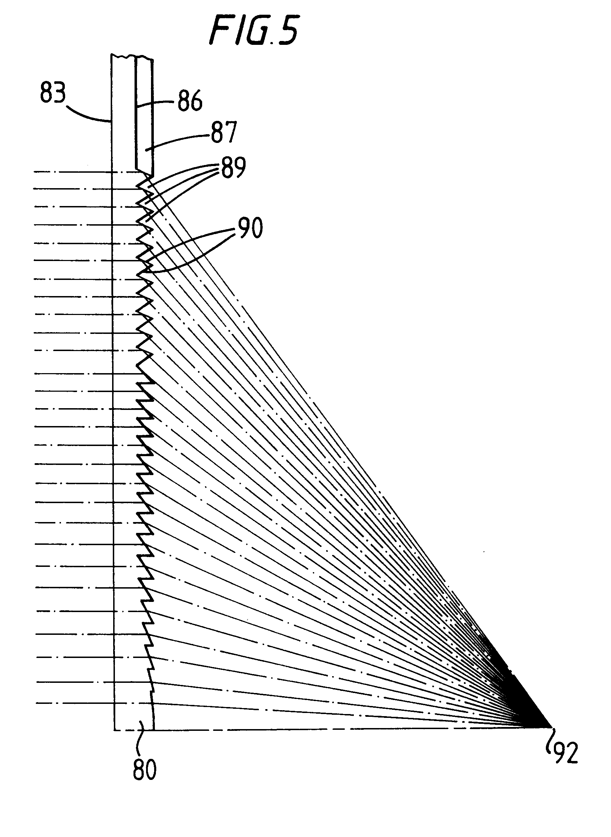

In Figure 4, lens plate 80 has an outer surface 83 having a generally rectangular peripheral portion 84 and a planar raised centre portion 85. The inner surface 86 of lens plate 80 has a generally rectangular recess 87 formed therein which carries a lens portion 88 extending over a trapezoidal portion of the said inner surface 86. Lens portion 88 comprises a plurality of concentric, substantially circular ridges 89 of generally triangular cross section, each ridge 89 having two frustoconical surfaces 90; the ridges defining a "Fresnel-type" lens which is configured such that filament 61 of bulb 56 is positioned substantially at the focal point of the lens such that light from the filament incident on the lens portion 88 is transmitted by lens plate 80 as a substantially parallel beam (see Figure 5).

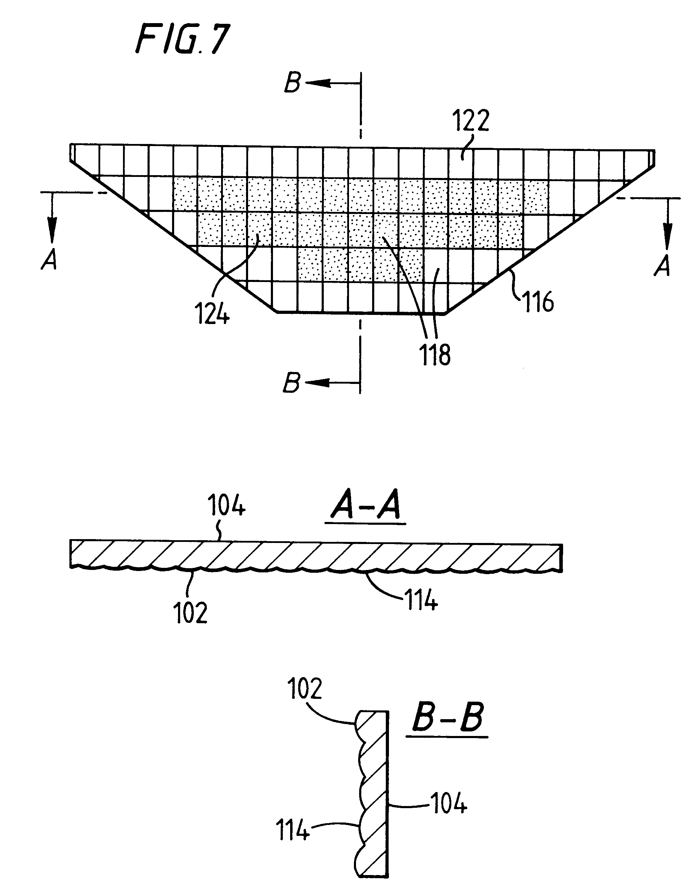

The outer surface 83 of lens plate 80 carries a diffuser plate 100 which is formed of a transparent, oranged coloured plastics material (see Figure 6). The diffuser plate 100 has an inner surface 102 and an outer surface 104. Outer surface 104 has a peripheral portion 106 and a raised central portion having a planar outer surface 104. The inner surface 102 has a generally flat peripheral portion 110 and a recessed central portion 112 which is formed with a configured surface 114. Peripheral portion 110 of inner surface 102 is carried contiguous to the outer surface 83 of the said peripheral portion 84 of the lens plate 80 and is joined to the latter by an adhesive or by plastic welding.

With reference to Figure 7, configured surface 114 comprises an optic portion 116 which has an array of pillow-case lens elements 118 arranged over a trapezoidal area of diffuser plate 100. The remainder of the configured surface 114 is configured to provide a plurality of raised cube-shaped projections 120, each projection 120 having an apex corresponding to one comer of the cube pointing away from the inner surface 102 and being generally hexagonal in plan view. The array of projections 120 thus provides a highly reflective surface which serves to scatter light from bulb 56 back into the said end space 72.

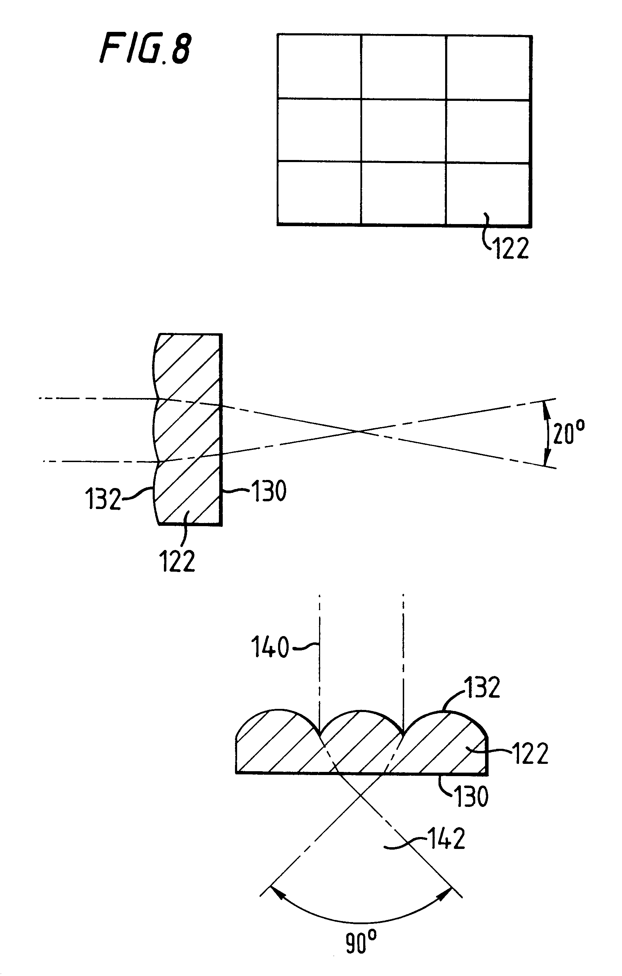

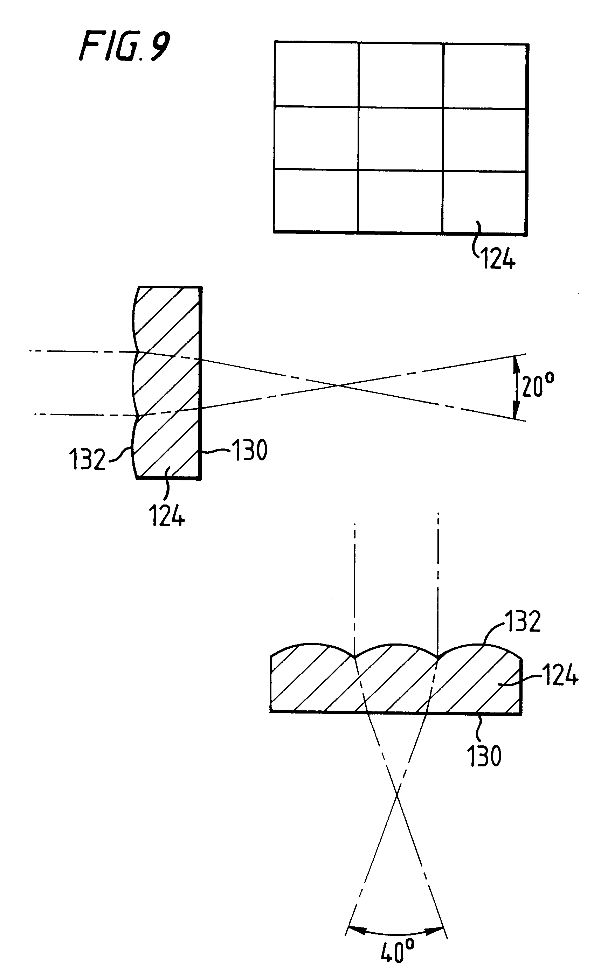

Optic portion 116 includes a first plurality of peripheral pillow-case lens elements 122 arranged around the periphery of the trapezoidal lens portion 116 and a second plurality of central pillow-case lens elements 124. Each pillow-case lens element 118 has a planar outer surface 130, an arcuate inner surface 132 and is generally rectangular in plan view. Each lens element 118 is configured to transmit a parallel beam of light incident on its arcuate inner surface 132 as a divergent beam 142. The amount of divergence imparted to the beam by each lens element 118 is related to the curvature of the arcuate surface 132 of the latter. With reference to Figures 8 and 9, the curvature of each pillow-case lens element 118 in one of its orthogonal directions is different from its curvature in its other orthogonal direction. For each peripheral lens 122, the dispersion in the one direction is 20°, while the dispersion in the said other direction is 90°; in the case of each central pillow-case lens 124, the dispersion in the one direction is 20° while the dispersion in the other direction is 40°. The trapezoidal optic portion 116 is positioned to coincide on an optical path with the lens portion 88 of lens plate 80, and the pillow-case lens elements 118 are shaped such that when the lamp assembly 10 is fitted to a vehicle, the said one dispersion direction is oriented along the fore-aft direction of the vehicle, while the said other dispersion direction is oriented laterally with respect of the vehicle.

The housing 12 is provided with suitable mounting means for fastening the housing 12 to a vehicle, and the back wall 14 of the housing 12 has a hole formed therein for cable access to the said terminal elements 66.

The lamp assembly 10 as herein described, therefore, provides a unitary assembly for a vehicle comprising a cluster of lamps of different types, wherein a marker lamp provided at one end of the housing 12 emits light which is transmitted by first and second aperture means in two different directions, thereby to provide a first beam eg. in the fore-aft direction of the housing 12 and a second beam which is directed through a side wall of the housing 12 to provide a side marker lamp. The assembly 10 is provided with beam shaping means in respect of each of the two beam directions of the said end lamp: parabolic reflector means are provided to provide a parallel beam of light in one of the said directions incident on the front wall of the housing 12, and a lens plate including Fresnel-type lens means is provided over an aperture formed in the side wall to provide a parallel beam of light in the said other direction. In each case, the resultant parallel beam of light is incident or impinges upon diffuses means including further lens means to provide a dispersed beam of light over a predetermined solid angle as desired.

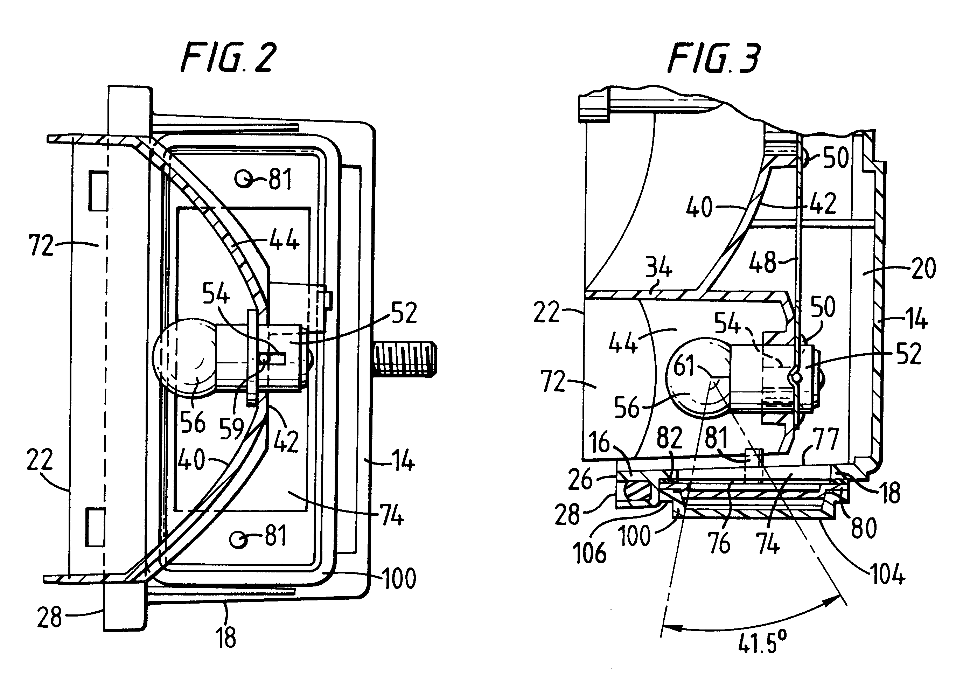

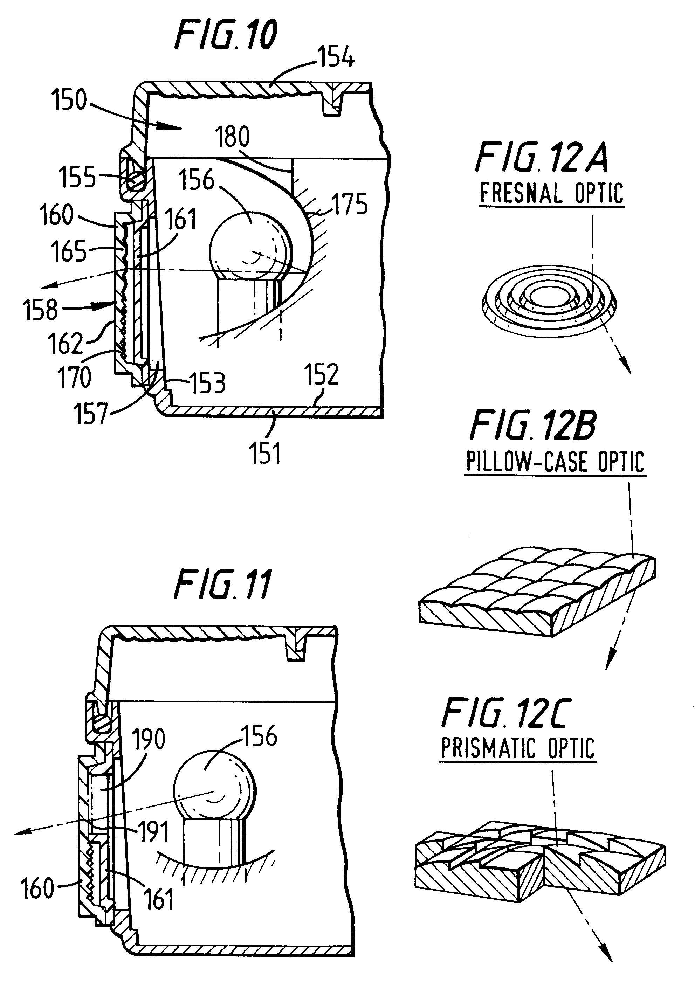

Turning now to the embodiment illustrated in Figure 10 of the accompanying drawings, a lamp assembly 150 comprises a housing 151 of which the bottom wall 152 and end wall 153 are shown. The housing is closed by a moulded lens portion 154 through sealing arrangement indicated generally at 155. Housing 151 accommodates a single light source 156 which in this case is a 12 watt bulb of known type and construction. The end wall 153 is provided with an opening defined at 157 which opening has fixedly secured thereinto a diffuser assembly 158. The diffuser assembly 158 comprises an outer diffuser 160 and an inner planar sealing portion 161. Diffuser 160 and sealing planar portion 161 are disposed in spaced relationship as shown in Figure 10 and the mating flanges of which are sealed one to the other by currently known means. The purpose of providing the backing 161 is to prevent the ingress of moisture and dirt into the intestices, crevaces or recesses of the contoured optics shaped on the internal surface of reflector 160. The outer surface 162 of diffuser 160 is generally planar for ease of cleaning and maintenance. Diffuser 160 may be provided at any appropriate colour depending on the desired colour of light transmitted thereby. Diffuser 160 is provided with an internal contoured surface 165 having defined thereon a plurality of pillow-case elements or optics, said pillow-case optics being disclosed in an array in the manner described with reference to the embodiment of Figure 1 to 9 thereby providing the differential illumination between the first directed flux of relatively high intensity and the second background dispersed flux of lower optical intensity when viewed from the side of lamp assembly 150.

Diffuser 160 also incorporates a reflex optic portion 170 which serves to provide a "reflector" light portion capable of reflecting light incident upon surface 162.

Juxtaposed light source 156, a reflector portion 175 which is adapted to receive light from source 156 and reflected in substantially parallel source through planar sealing component 161, said parallel light being transmitted to pillar optics portion 160 and reflex optics portion 162 to provide the necessary optical effects to provide the first directed flux and the second background flux as described above.

The parabolic reflected 175 is cut away at 180 to allow light from source 156 to impinge upon lens portion 154.

In an alternative embodiment as shown in Figure 10, the planar portion 161 may be provided with an optical portion to provide a focused beam for the first flux portion high intensity and the outer diffuser may be provided with the necessary optics to provide the second disbursed illuminating flux portion. It will be appreciated by the man skilled in the art that the functions can be readily inter changed.

Turning now to Figure 11 this illustrates a variant of the arrangement of Figure 10 in which the lateral reflector 175 is dispensed with and a lens portion 190 is provided or carried on the planar sealing element 161. In this case the lens portion may comprise either a Fresnal optic as shown in Figure 12A, a pillow-case optic as shown in Figure 12B or a prismatic optic as shown in Figure 12C, the arrangement being such that the lens portion 190 acts on light incident thereon to provide a proportion of parallel light 191 prior to impingement on the diffuser 160. The diffuser 160 may have a differential optical surface to provide the two light fluxes described above. The pattern of the diffuser may comprise again a Fresnal optic, a pillow-case optic or prismatic optics configured to provide a directed beam of first relatively high intensity and a second beam of background flux.

It will be appreciated, therefore, that the latter assembly of the present invention obviates the requirement for a separate side marker lamp assembly in the area of general light cluster on a tractor or trailer unit and because of the shared function of a single light source reduces the electrical power consumption required for such a side marker assembly In addition, the assembly in accordance with the present invention provides differential light fluxes in accordance with current vehicle regulations.

## Claims

1. A lamp assembly for a motor vehicle comprising a light source,
collimating means for collimating at least a portion of light from said source to provide a substantially parallel light beam and
diffuser means disposed in the path of said parallel light beam,
characterised in that the said diffuser means is adapted to provide a first light flux which is transmitted by the diffuser means with small or no dispersion to provide a first flux of high intensity and a second flux in which the light is more widely dispersed to provide a general background flux, the intensity of the first flux when viewed on its optical axis being significantly greater than the intensity of the second flux.

2. An assembly as claimed in claim 1 characterised in that the assembly is a multi-lamp cluster in which the light source, collimating means and diffuser are disposed at an end thereof and the light source is shared with another lamp function.

3. An assembly as claimed in either of the preceding claims characterised in that the diffuser means comprises a first diffuser portion to produce high intensity flux and a second diffuser portion to produce a low intensity background flux.

4. An assembly as claimed in any preceding claim characterised in that the light source is a shared light source and the housing accommodating said source is provided with at least two apertures for the transmission of light.

5. An assembly as claimed in any preceding claim characterised in that the diffuser means includes a reflex optic portion.

6. An assembly as claimed in any preceding claim characterised in that the collimating means is a lens or a reflector.

7. An assembly as claimed in claim 6 characterised in that the collimating means is a Fresnel lens, a pillow-case optic or a prismatic optic.

8. An assembly as claimed in any preceding claim characterised in that the diffuser means has a planar external wall with an optical surface on the inner wall thereof.

9. An assembly as claimed in any preceding claim characterised in that the first diffuser portion is a Fresnel optic, a pillow-case optic and/or a prismatic optic.

10. An assembly as claimed in any preceding claim characterised in that the second diffuser portion may be a Fresnel optic, a pillow-case optic and/or a prismatic optic which is arranged to provide a dispersed flux.

11. An assembly as claimed in any preceding claim characterised in that the diffuser means comprises a sealed unit having an outer diffuser portion and an inner lens portion, said inner lens portion comprising the said collimating means for providing a bundle of substantially parallel raised incident upon the diffuser portion which diffuser means comprises first and second diffuser portions to provide said first and second fluxes.

12. An assembly as claimed in any preceding claim characterised in that said diffuser means comprises a pillow-case optic having an array of different shaped pillow-case elements to provide both said first flux and said second flux.

13. An assembly as claimed in claim 12 characterised in that the diffuser means comprises a plurality of pillow-case lens elements, each of which is part of an array over a portion of the diffuser, each pillow-case lens element being shaped to provide a predetermined divergence of parallel light incident thereon, each pillow-case lens element having characteristics to contribute either to said first light flux or said second light flux.

14. An assembly as claimed in claim 13 characterised in that the pillow-case optics may comprise first pillow-case lens elements having a dispersion angle in one plane of the order of 15-25° and a dispersion angle in an orthogonal plane of 35-45° and second pillow-case lens elements having a dispersion angle in said one plane of 15-25° and a dispersion angle in the orthogonal plane of 85-95°.

15. An assembly as claimed in claim 14 wherein the second pillow-case lens elements are disposed about the periphery of the portion and the first pillow-case elements are grouped towards the centre thereof.

16. An assembly as claimed in any preceding claim characterised in that the collimating means is a reflector and in that the diffuser is a sealed unit having a lens portion as described above with a substantially planar backing plate.
